# EUROPEAN PATENT APPLICATION

(11) **EP 1 983 407 A2**
(43) Date of publication of application: **22.10.2008**
(21) Application number: 07122040.4
(22) Date of filing: 30.11.2007
(51) Int. Cl.: G06F 3/033, H04N 5/445

(54) **Method for providing graphical user interface (GUI) and electronic device thereof**

(30) Priority: 19.04.2007 KR 20070038396
(71) Applicant: Samsung Electronics Co., Ltd, Suwon-si, Gyeonggi-do 442-742 (KR)
(72) Inventor: Nam, Dae-hyun, Gyeonggi-do (KR); Yun, Hyun-kyu, Seoul (KR)
(74) Representative: Clark, David James

(57) **Abstract**

A method for providing a Graphical User Interface (GUI) and an electronic device using the same are provide. The method for providing a GUI includes receiving rotation information from an external input device by sensing movement of the external input device, and changing a display state of information output on a display using the rotation information of the external input device. Therefore, a user can output setup information conveniently, and user's convenience is provided.

## Description

### BACKGROUND OF THE INVENTION

### 1. Field of the Invention

Apparatuses and methods consistent with the present invention relate to providing a Graphical User Interface (GUI) and an electronic device using the same, and more particularly, to providing a GUI to output information of an electronic device by sensing movement of a remote control device and an electronic device using the same.

### 2. Description of the Related Art

User Interface (UI) is generally referred to as a means by which an electronic device and a user can interact, and more particularly, as a means by which a user transmits user command to an electronic device. Examples of the electronic device include a digital television, a set top box, a projector, or a digital camcorder, and examples of the UI include a graphical user interface (GUI).

A user presses a key on an input device in GUI environment to input command, so that setup information of an electronic device is displayed on a display.

Manipulation keys to manipulate a plurality of devices such as a television, a settop box, a digital versatile disc (DVD) player are provided on the input device. Accordingly, manipulating the keys on the input device to display setup information is cumbersome. As, the input device supports more manipulation devices, inconvenience increases.
A user wants more convenient manipulation method of the GUI. Accordingly, a method to display a frequently-used function of an electronic device such as a function of displaying setup information is required.

### SUMMARY OF THE INVENTION

Exemplary embodiments of the present invention address the above disadvantages and other disadvantages not described above.

According to an aspect of the present invention, there is provided a method for providing a Graphical User Interface (GUI) comprising receiving information on movement of an external input device acquired from an acceleration sensor of the external input device; and changing a display state of information output on a display using the information on movement of the external input device.

The information of movement may be acquired by moving the external input device to a direction on the basis of an axis of the external input device.

The information may comprise at least one of a channel number, a volume, an externally-connected device, a date, time, and a timer recording.

The display state of the information may comprise either a setup information display or a setup information cancel, on the display.

The changing may change the display state by displaying the information in an area in which a pointer is displayed on the display.

If the pointer moves, the changing may change the display state by displaying the information near the moved pointer.

The information on movement of the external input device may be acquired through a gyro sensor.

The external input device may be a remote control device.

According to another aspect of the present invention, there is provided an electronic device comprising a transceive unit which receives information on movement of an external input device acquired from an acceleration sensor of the external input device; and a control unit which changes a display state of information output on a display using the information on movement of the external input device.

The information of movement may be acquired by moving the external input device to a direction on the basis of an axis of the external input device.

The information may be set by a user.

According to yet another aspect of the present invention, there is provided a method of remote control comprising sensing a moving direction of an external input device which is movable by a user in a space; and transmitting a control signal indicating whether or not to display information on a display of an external apparatus on the basis of the sensed moving direction.

According to yet another aspect of the present invention, there is provided an external input device comprising a sensing unit which senses a moving direction of an external input device; a control unit which outputs a control signal indicating whether or not to display information on the display of an external apparatus on the basis of the sensed moving direction; and a transceive unit which transmits the control signal to the external apparatus.

According to yet another aspect of the present invention, there is provided a method for providing a GUI comprising receiving information on movement of an external input device acquired from a sensor recognizable moving pattern of the external input device, wherein the sensor is mounted in the external input device; and outputting a menu or a display setup information information to be displayed in dependence upon an amount or speed of movement of the external input device.

The method further comprising the step of displaying the menu or the display setup information.

The method may be incorporated in a television receiver device having a display.

The movement may include a rotational movement.

The movement may include a translational movement.

If the movement of the external input device is within a predetermined range, the outputting may out the menu or the display setup information.

If the movement of the external input device is not within the predetermined range, the outting may perform another function.

The another function may be moving a pointer on a display.

According to the present invention there is provided an apparatus and method as set forth in the appended claims. Other features of the invention will be apparent from the dependent claims, and the description which follows.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIGS. 1A to 1C are views illustrating a broadcast receiving system to which an exemplary embodiment of the present invention is applicable;
FIG. 2 is a block diagram of digital television (DTV) and a remote control;
FIG. 3 is a view illustrating result detected in a movement sensor on a remote control according to an embodiment of the present invention;
FIG. 4 is a flowchart illustrating a method for providing a GUI outputting setup information on a display according to an embodiment of the present invention; and
FIG. 5 is a view illustrating a method for providing a GUI outputting setup information on a display according to an exemplary embodiment of the present invention;
FIGS. 6 and 7 are views illustrating another exemplary embodiment of the present invention;
FIGS. 8 and 9 are views illustrating yet another exemplary embodiment of the present invention.

### DETAILED DESCRIPTION OF THE EXEMPLARY EMBODIMENTS

Certain exemplary embodiments of the present invention will now be described in greater detail with reference to the accompanying drawings.

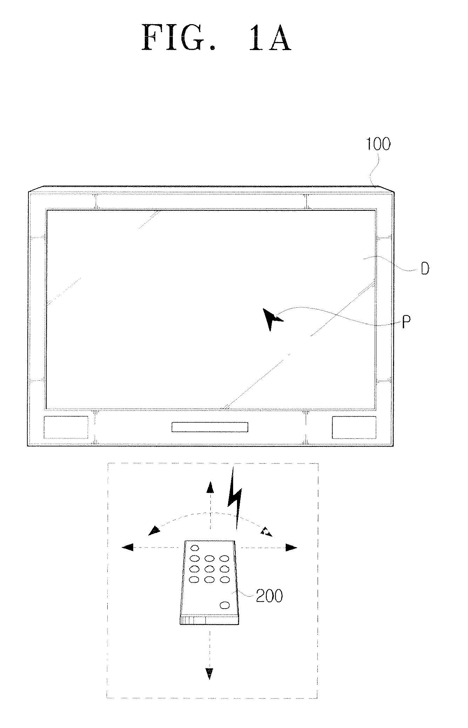

FIGS. 1A to 1C are views illustrating a broadcast receiving system to which an exemplary embodiment of the present invention is applicable. Referring to FIG. 1A, a broadcast receiving system may comprise a digital television (DTV) 100 as a broadcast receiving device, and a remote control 200 as a user input device.

The DTV 100 provides a user with a broadcast received over wire or wirelessly, through a display D. Additionally, the DTV 100 may provide a user through the display D with an input from an external apparatus which is connected over wire or wirelessly, and data reproduced from a built-in storage medium, such as a moving image file, a still image file, or a music file.

The remote control 200 sends information regarding the manipulation of the user to the DTV 100, and the DTV 100 operates according to the received information. Although the remote control 200 of FIG. 1A includes a plurality of keys, the remote control 200 may include either one or two keys as occasion demands. A plurality of keys are provided on the top side of the remote control 200, but the plurality of keys may be provided on the other sides such as the left or right side, or the bottom.

As indicated by a dotted arrow in FIG. 1A, the face of the remote control 200 may be moved in a space by the user in an upwards or downwards direction, or to the left or right, or in a direction combining two of these directions, such as an upper-leftwards direction. That is, the face of the remote control 200 may be moved in any direction including rotation on face axis.

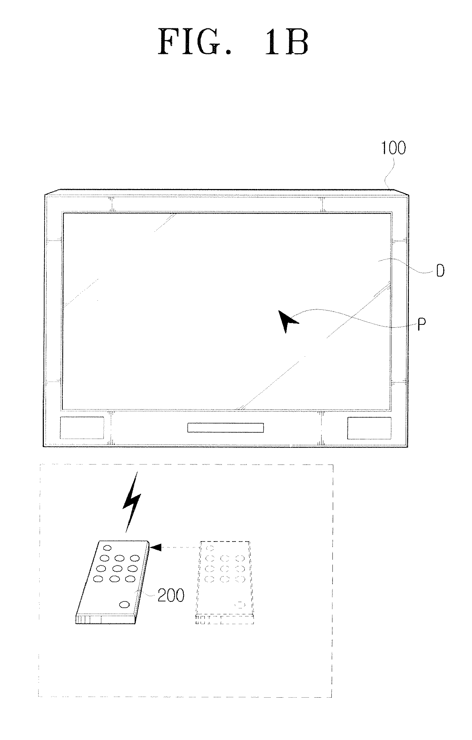

For example, the face of the remote control 200 may be moved while drawing a locus on a virtual plane (VP) which is parallel to a screen of the display D. FIG. 1B is a view illustrating a case in which the face of the remote control 200 is moved to the left direction while drawing a locus on a virtual plane which is parallel to the screen of the display D by the user.

The VP may not be perfectly parallel to the screen of the display D, and may not be a perfect plane. That is, it is difficult for the movement of the face of the remote control 200 by the user to be on a perfect plane and perfectly parallel to the screen of the display D.

Accordingly, exemplary features and aspects of the present invention are also applicable to a case in which the face of the remote control 200 moves on an imperfect plane and imperfectly parallel to the screen of the display D.

A user may move the face of the remote control 200 by moving only the wrist and fixing his arm that holds the remote control 200.

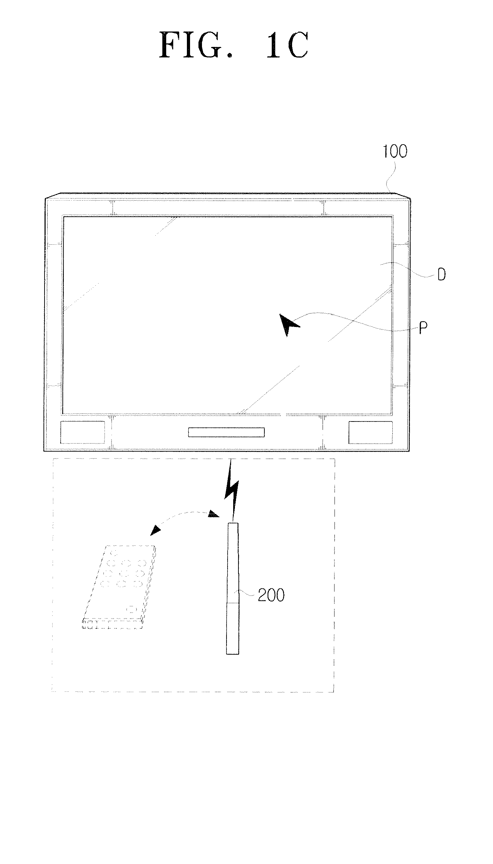

If the user's wrist moves only in an upwards or downwards direction, or to the left or right, or in a direction combining these, such as an upper leftward direction, the face of the remote control 200 may be moved upwards, downwards, or to the left or right, or in a direction combining these, such as an upper leftwards direction while drawing a curved locus on a virtual hemisphere surface. FIG. 1C is a view illustrating the case in which the face of the remote control 200 is moved to the right by a user while drawing a curved locus on a virtual hemisphere surface. That is, the face of the remote control is rotated at a predetermined angle, and is moved.

The virtual hemisphere surface, on which the face of the remote control 200 is moved by rotation of the user's wrist, may be a mathematically imperfect hemisphere surface. That is, it is difficult for the face of the remote control 200 to be moved by rotating the user's wrist while drawing a locus on a mathematically perfect hemisphere surface.

Accordingly, exemplary features and aspects of the present invention are also applicable to the case in which the face of the remote control 200 moves not on a mathematically perfect hemisphere but an imperfect hemisphere surface while drawing a curved locus.

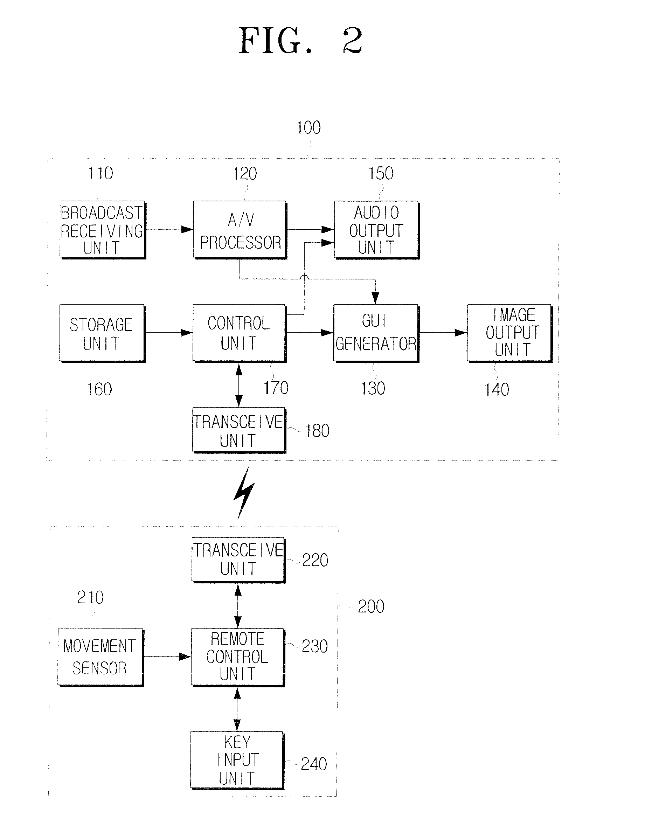

That is, the pointer P displayed on the display D may be moved by the user spatially moving the remote control 200. When the face of the remote control 200 is moved in a space, the pointer P displayed on the display D moves in the same direction as the face of the remote control 200. The spatial movement of the face of the remote control 200 is distinguished from the movement of a mouse for a personal computer (PC) which is moved over a surface.
Referring to FIG. 2, the remote control 200 may comprise a movement sensor 210, a transceive unit 220, a remote control unit 230, and a key input unit 240.

The movement sensor 210 senses the movement of the face of the remote control 200 moved by user, and sends rotation information such as moving direction, moving velocity, and moving distance based on the result of sensing to the remote control unit 230 which will be explained in detail below. For example, the movement sensor 210 may be implemented using one or more of a triaxial gyro sensor, a triaxial acceleration sensor, and a fingerprint recognition sensor, preferably the movement sensor 210 may be implemented using combination of at least two among the triaxial gyro sensor, the triaxial acceleration sensor, and the fingerprint recognition sensor.

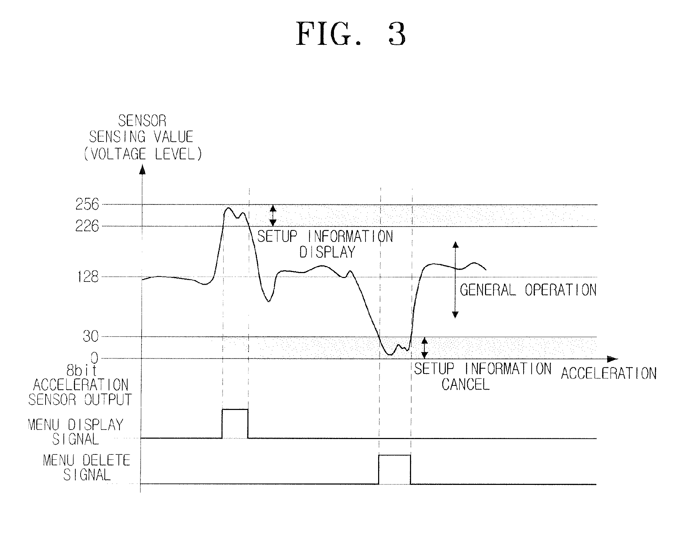

As illustrated in FIG. 3, a voltage level is provided as an example of the rotation information of the sensing result output from the movement sensor 210. Referring to FIG. 3, when a user moves the face of the remote control 200 fast, an output of the movement sensor 210 corresponds to the range of a setup information display and a setup information cancel, but when the user moves the face of the remote control 200 slowly, an output of the movement sensor 210 corresponds to the range of general operation such as movement of a pointer.

The key input unit 240 may comprise a power key, a channel key, a volume key, and a select key.

The remote control unit 230 transmits the rotation information transmitted from the movement sensor 210, to the DTV 100 via the transceive unit 220, and the remote control unit 230 may conduct axis compensation, hand tremble compensation, and temperature compensation of the remote control 200.

The remote control unit 230 may also send information about key input by the user using the key input unit 240 to the DTV 100 through the transceive unit 220. The transceive unit 220 may be implemented using one of a radio frequency (RF) module, Zigbee, Bluetooth, and Infrared red (IR).

Referring to FIG. 2, the DTV 100 may comprise a broadcast receiving unit 110, an A/V processor 120, a Graphic User Interface (GUI) generator 130, an image output unit 140, an audio output unit 150, a storage unit 160, a control unit 170, and a transceive unit 180.

The broadcast receiving unit 110 receives a broadcast over wire or wirelessly from a broadcasting station or a satellite and decodes the received broadcast.

The A/V processor 120 executes signal processing such as video decoding, video scaling, and audio decoding of the broadcast output from the broadcast receiving unit 110. The A/V processor 120 transmits the video signal to the GUI generator 130, and the audio signal to the audio output unit 150, respectively.

The GUI generator 130 generates a GUI to be displayed on a display D, that is, on the image output unit 140, and combines the GUI with the image output from the A/V processor 120. The GUI generator 130 generates a GUI corresponding to a control command received from the control unit 170 which will be explained below, and outputs the GUI on the image output unit 140.

The image output unit 140 may display the image combining the GUI output from the GUI generator 130 on the display D, or output it to an external display such as external TV connected through an external output terminal (not shown).

The audio output unit 150 outputs the audio output from the A/V processor 120 via a speaker, or outputs the audio to the external apparatus connected through the external output terminal.

The storage unit 160 stores a table including programs and setup information to control overall operation of the DTV 100. Table 1 illustrates an example of the setup information table.

**[table 1]**

| Operation information | Rotation information |
|---|---|
| Setup information display | 226∼255 |
| General operations | 30~225 |
| Setup information cancel | 0~29 |

The setup information table comprises operation information, and the rotation information of the face of the remote control 200 corresponding to the operation information. The rotation information is a sensed value acquired from the movement sensor 210 when the face of the remote control 200 moves while drawing a curved locus clockwise or counterclockwise on the basis of the face of the remote control 200. There is a voltage level output from the movement sensor 210 as an example of the sensor value.

The operation information may comprise at least one of the setup information display, the setup information cancel, and the general operations, and the general operations include operations such as a display of a pointer direction. The setup information of the DTV 100 may comprise at least one of a channel number, a volume, an externally-connected device, a date, time, and a timer recording. Other types of information, control menu, operation may be activated or performed in accordance with the voltage level output as described above.

The control unit 170 receives a command of a user on the basis of a manipulation of a user such as the rotation information of the face of the remote control 200, or a key input, transmitted from the remote control 200 via the transceive unit 180, and controls the overall operation of the DTV 100 according to the received user command.

The control unit 170 determines whether or not setup information by the user command is displayed on the basis of rotation information of the face of the remote control 200 received through the transceive unit 180. The control unit 170 controls the GUI generator 130 to process operation according to the rotation information of the face of the remote control received through the transceive unit 180 based on the setup information table stored in the storage unit 160.

For example, if the rotation information of the remote control 200 received through the transceive unit 180 is '240', the control unit 170 may output a command to display setup information corresponding to the rotation information '240' to the GUI generator 130 based on the setup information table.

The sensor sensing value may be a voltage value representing the amount of rotational movement, translational movement, the combination of the rotational movement and the translational movement or other types of movement.

The control unit 170 determines the direction of movement of the face of the remote control 200 on the basis of information received through the transceive unit 180.

The control unit 170 controls the GUI generator 130 so that the pointer P is displayed while moving on the display D according to the determined direction.

The control unit 170 controls the GUI generator 130 so that the setup information is displayed near the pointer P on the display D. That is, the setup information of the DTV 100 may be displayed in upwards or downwards direction, or to the left or right, or in a direction combining these.

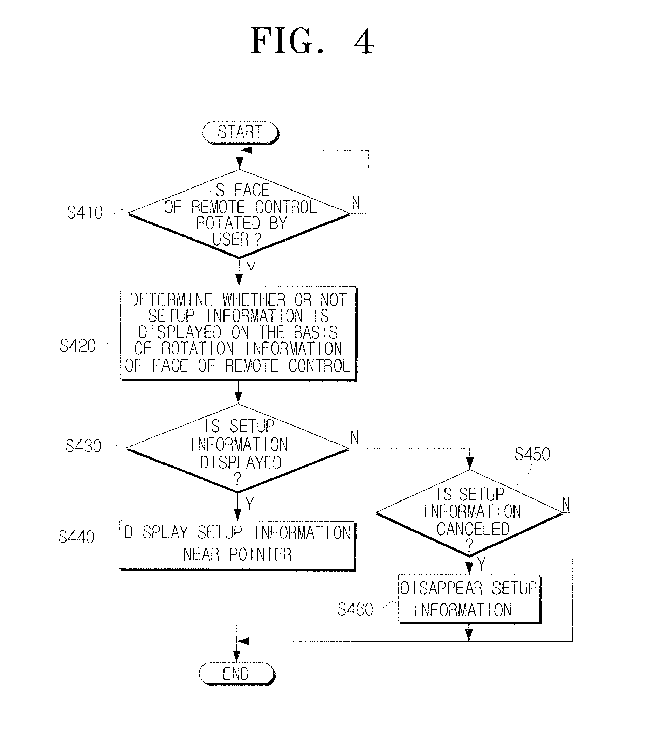

FIG. 4 is a flowchart illustrating a method for providing a GUI outputting setup information on a display D according to an embodiment of the present invention.

Referring to FIG. 4, if a face of the remote control 200 is rotated by a user (S410:Y), the control unit 170 determines whether or not setup information of the DTV 100 is displayed on a display D on the basis of the rotation information of the face of the remote control 200 (S420). The rotation information is an output value of the movement sensor 210 which is acquired while the face of the remote control 200 is moved in a curved locus clockwise or counterclockwise.

That is, the control unit 170 determines operation information corresponding to the rotation information of the face of the remote control 200 received from the remote control 200 based on the setup information table, and accordingly determines whether or not setup information of the DTV 100 is displayed on the display D. The setup information of the DTV 100 comprises at least one of a channel number, a volume, an externally-connected device, a date, time, and a timer recording. As explained above, other types of information, control menu or operation may be activated or performed in accordance with the amount of the rotation information.

If the setup information is displayed (S430:Y), the control unit 170 controls the GUI generator 130 so that the setup information of the DTV 100 is displayed near the pointer P currently displayed on the display D (S440).

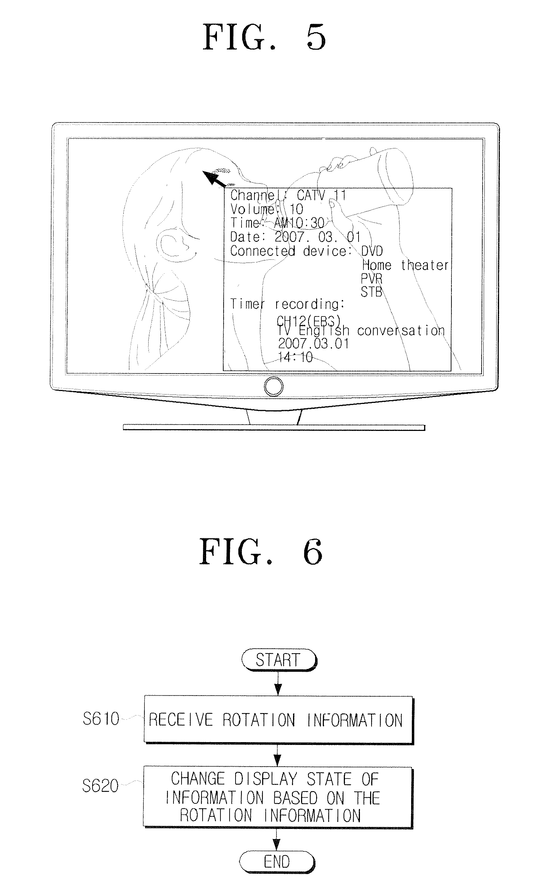

As illustrated FIG. 5, GUI of the setup information generated at the GUI generator 130 is displayed near the pointer P. If the pointer P moves, the control unit 170 may control the GUI generator 130 so that the setup information is moved along with the pointer P and displayed in the new location. The direction of the pointer P is the same as the direction of the face of the remote control 200.

In operation S430, if rotation information of the face of the remote control 200 is not the setup information display (S430:N) but the setup information cancel (S450:Y) based on the setup information table, the control unit 170 controls the GUI generator 130 so that setup information disappears from the display D (S460).

In operation S450, if rotation information the face of the remote control 200 indicates the general operations (S450:N), the control unit 170 controls the GUI generator 130 so that the pointer P moves to the direction of the face of the remote control 200.

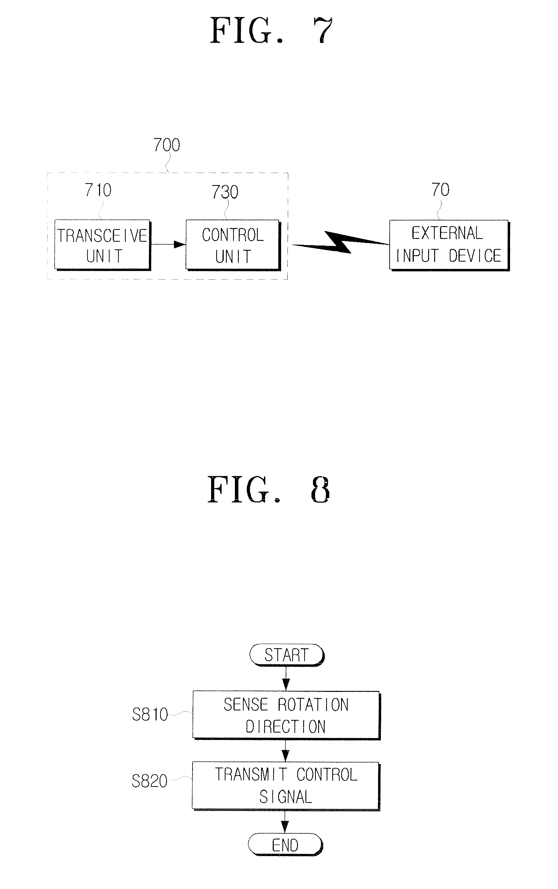

FIGS. 6 and 7 are views illustrating another exemplary embodiment of the present invention.

According to a method for providing a GUI of FIG. 6, an electronic device receives rotation information of an external input device from the external apparatus (S610).

A display state of information output on a display D through the rotation information of the external input device is changed (S620). That is, a menu or display setup information output on the display D may be changed as an example of the display state.

Referring to FIG. 7, an electronic device according to another exemplary embodiment of the present invention 700 may comprise a transceive unit 710, and a control unit 730. The transceive unit 710 receives rotation information of the external input device 70 from an external input device 70.

The control unit 730 changes a display state of information output on the display D on the basis of the rotation information of the external input device 70 received from the transceive unit 710.

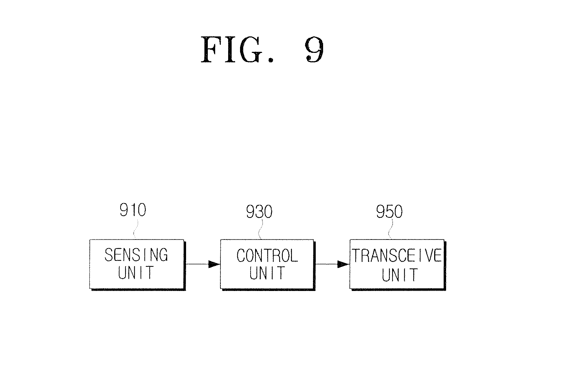

FIGS. 8 and 9 are views illustrating yet another exemplary embodiment of the present invention.

According to a remote control method of FIG. 8, a remote control device senses the rotation direction of an external input device which is movable by user in a space (S810).

The transceive unit 710 transmits to an external apparatus a control signal indicating whether or not to display information on a display D of the external apparatus on the basis of the sensed rotation direction (S820).

As illustrated in FIG. 9, an external input device may comprise a sensing unit 910, a control unit 930, and a transceive unit 950. The sensing unit 910 senses the rotation direction of the external input device which is moved by user in a space.

The control unit 930 outputs a control signal indicating whether or not to display information on a display D of the external apparatus on the basis of the sensed rotation direction.

The transceive unit 750 transmits the control signal output from the control unit 930 to the external apparatus.

In an exemplary embodiment of the present invention, if the face of the remote control 200 moves to either clockwise or counterclockwise, the setup information is displayed. If the face of the remote control 200 moves opposite to the direction displaying the setup information, the setup information is canceled. However, the above examples should not be constructed as limiting. Alternatively, the setup information may be canceled when the face of the remote control 200 moves to the direction where the setup information is displayed in the above example.

That is, if the face of the remote control 200 moves such that the rotation information is within a predetermined range such as the setup information display or the unset information cancel, the control unit 170 determines whether or not the setup information is displayed on the display D. If the setup information is displayed, the control unit 170 controls the GUI generator 130 so that the setup information disappears from the display D. On the other hand, if the setup information is not displayed, the control unit 170 controls the GUI generator 130 so that the setup information is displayed on the display D.

In an exemplary embodiment of the present invention, whether or not setup information of the DTV 100 is displayed is determined based on the setup information table from the DTV and the rotation information the face of the remote control 200 received from the remote control 200. Alternatively, whether or not the setup information of the DTV 100 is displayed may be determined through the remote control 200.

The setup information table is pre-stored in a buffer (not shown) on the remote control 200, or in a storage unit (not shown). The remote control unit 230 may determine whether or not the setup information of the DTV 100 is displayed in the same manner as the control unit 170 of the DTV 100, with reference to the rotation information and the setup information table.

In an exemplary embodiment of the present invention, the setup information display and the setup information cancel of the DTV 100 are explained on the basis of the rotation information of the face of the remote control 200. However, the above examples should not be constructed as limiting. Alternatively, the setup information of external apparatuses connected to the DTV 100 may be displayed.

In an exemplary embodiment of the present invention, although the control unit 170 determines whether or not the setup information is displayed on the basis of the rotation information of the remote control 200, the above examples should not be constructed as limiting. Alternatively, the control unit 170 may determine whether or not a menu provided from the DTV 100 is displayed using the information on movement of the remote control 200 or translation information of the remote control 200.

In an exemplary embodiment of the present invention, the rotation information of the face of the remote control 200 is using the face of the remote control 200 as a reference axis, but it is not limited therein. Alternatively, the reference axis may be any side or edge of the remote control 200.

In an exemplary embodiment of the present invention, it is explained that the rotation information of the face of the remote control 200 is acquired while moving the face of the remote control 200 in a curved locus clockwise or counterclockwise, but it is not limited therein. The rotation direction of the remote control 200 is possible in any direction. For example, the rotation information may be acquired by rotating the face of the remote control 200 in a curved locus in upwards or downwards direction.

The setup information is displayed or disappears based on the predetermined setup information table, but the rotation information corresponding to the operation information within the setup information table may be set by a user. That is, acceleration level according to moving speed of the face of the remote control 200 may be set by a user.

The setup information is displayed or disappears on or from the display D according to movement of the face of the remote control 200, in an exemplary embodiment of the present invention, but it is not limited therein. Alternatively, if the predetermined time is passed after displaying the setup information, the control unit 170 may control the GUI generator 130 so that the setup information disappears from the display D.

The setup information is displayed near the pointer P, but it is not limited therein. Alternatively, the setup information may be displayed at the position which is defined by a user on the display D.

The setup information is displayed on the display D, but the setup information may display information (for example, electronic program guide) defined by a user on the basis of the rotation information on the display D.

While the information of the electronic device is output by sensing the movement of the remote control device in the exemplary embodiment of the present invention, it is not limited thereto. Alternatively, the information of the electronic device may be output by sensing the movement of an external input device which provides a user command to the electronic device.

The electronic device is provided for an interface with a user, but it is not limited thereto. The movement of the remote control unit may be sensed from a broadcast receiving device or video device to output the information of the broadcast receiving device or video device. The video device may be a digital video disc (DVD) player, a personal computer (PC), a liquid crystal display (LCD) monitor, a projector, a digital camera, and a digital camcorder, and the broadcast receiving apparatus may be a settop box (STB), a television (TV), and a home theater.

As described above, a GUI is provided to display setup information of the electronic device through the rotation information acquired by sensing the movement of the remote control device near the pointer P on the display. As a result, a manipulation of a user is more convenient.

A GUI is provided to display a menu using the only rotation information acquired by sensing the movement of the remote control device without manipulating a key on the remote control device. Accordingly, although the number of keys on the remote control device increases, a user can easily acquire a desired menu on the display.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for providing a Graphical User Interface (GUI) comprising:
receiving information on movement of an external input device acquired from an acceleration sensor of the external input device (S410) ; and
changing a display state of information output on a display using the information on movement of the external input device (S420-S460) .

2. The method of claim 1, wherein the information of movement is acquired by moving the external input device to a direction on the basis of an axis of the external input device.

3. The method of claim 1 or 2, wherein the information on movement required to trigger change of the display state is set in advance by a user.

4. The method of claim 1, 2 or 3, wherein the information output on the display comprises at least one of a channel number, a volume, an externally-connected device, a date, time, and a timer recording.

5. The method of any one of claims 1-4, wherein the display state of the information comprises either a setup information display or a setup information cancel, on the display.

6. The method of any preceding claim, wherein the changing changes the display state by displaying the information in an area in which a pointer is displayed on the display.

7. The method of claim 6, wherein if the pointer moves, the changing changes the display state by displaying the information near the moved pointer (S440).

8. The method of any preceding claim, wherein the information on movement of the external input device is acquired through a gyro sensor.

9. The method of any preceding claim, wherein the external input device is a remote control device.

10. An electronic device comprising:
a transceive unit (180) which receives information on movement of an external input device (200) acquired from an acceleration sensor (210) of the external input device (200); and
a control unit (170) which changes a display state of information output on a display using the information on movement of the external input device (200).

11. The electronic device of claim 10, wherein the information of movement is acquired by moving the external input device (200) to a direction on the basis of an axis of the external input device (200).

12. The electronic device of claim 10, wherein the information on movement required to trigger change of the display state is set in advance by a user.

13. A method of remote control comprising:
sensing a moving direction of an external input device which is movable by a user in a space (S810); and
transmitting a control signal indicating whether or not to display information on a display of an external apparatus on the basis of the sensed moving direction (S820).

14. An external input device comprising:
a sensing unit (210) which senses a moving direction of an external input device (200);
a control unit (230) which outputs a control signal indicating whether or not to display information on the display of an external apparatus on the basis of the sensed moving direction; and
a transceive unit (220) which transmits the control signal to the external apparatus.

15. A method for providing a GUI comprising:
receiving information on movement of an external input device acquired from a sensor recognizable moving pattern of the external input device, wherein the sensor is mounted in the external input device (S610); and
outputting a menu or a display setup information to be displayed in dependence upon an amount or speed of movement of the external input device (S620).

16. The method of claim 15, further comprising the step of displaying the menu or the display setup information.

17. The method of claim 15 or 16, wherein the method is incorporated in a television receiver (100) device having a display (D).

18. The method of claim 15, 16, or 17, wherein the movement includes a rotational movement.

19. The method of any one of claims 15-18, wherein the movement includes a translational movement.

20. The method of any one of claims 15-19, wherein if the movement of the external input device (200) is within a predetermined range, further comprising the step of outputting the menu or the display setup information.

21. The method of claim 20, wherein if the movement of the external input device is not within the predetermined range, performing another function.

22. The method of claim 21, wherein the another function is moving a pointer on a display.

23. The method of any one of claims 15-19, wherein if the movement of the external input device is within a predetermined range, canceling the menu or the display setup information from being displayed.

24. The method of claim 22, wherein the menu or the display setup information is moved in dependence upon the moving of the pointer on the display.

25. The method of any one of claims 15-24, wherein the menu or the setup information is outputted near a pointer displayed on a display.
